(19) Europäisches Patentamt

European Patent Office

Office européen des brevets

(11) Publication number: **0 232 605**
**B1**

(12) **EUROPEAN PATENT SPECIFICATION**

(45) Date of publication of patent specification: **19.09.90**

(51) Int. Cl.[5]: **F 17 C 1/16, C 08 J 5/04**

(21) Application number: **86309591.5**

(22) Date of filing: **09.12.86**

(54) **Pressure vessels.**

(30) Priority: **19.12.85 JP 286764/85**

(43) Date of publication of application:
**19.08.87 Bulletin 87/34**

(45) Publication of the grant of the patent:
**19.09.90 Bulletin 90/38**

(84) Designated Contracting States:
**DE FR GB**

(56) References cited:
**DE-A-3 103 769**
**FR-A-2 427 910**

**CHEMICAL ABSTRACTS, vol. 104, no. 4, 27th January 1986, pages 34-35, no. 20300s, Columbus, Ohio, US; & JP-A-60 185 864**

**CHEMICAL ABSTRACTS, vol. 104, no. 4, 27th January 1986, page 35, no. 20301t, Columbus, Ohio, US; & JP-A-60 185 862**

(73) Proprietor: **SUMITOMO CHEMICAL COMPANY, LIMITED**
**Kitahama 4-chome 5-33**
**Chuo-ku Osaka 541 (JP)**

(72) Inventor: **Sugimoto, Hiroaki**
**13-5, Kawanishicho-1-cho**
**Takatsuki-shi (JP)**
Inventor: **Hayatsu, Kazuo**
**11-8, Kamihozumi-2-chome**
**Ibaraki-shi (JP)**
Inventor: **Yamatsuta, Kohji**
**4-2, Hiyoshidai-4-chome**
**Otsu-shi (JP)**

(74) Representative: **Lamb, John Baxter et al**
**MARKS & CLERK 57/60 Lincoln's Inn Fields**
**London WC2A 3LS (GB)**

## Description

This invention relates to pressure vessels and the manufacture thereof.

There are known pressure vessels made of fibre-reinforced plastics material, i.e. formed from reinforcing fibres, such as glass and/or carbon fibres, in a synthetic resin matrix.

However, these pressure vessels have disadvantages in that, when glass fibres are used therein, since glass fibres have a density of about 2.5 g/cm$^3$ they are not satisfactorily light in weight, whereas when carbon fibres are used, since the elongation of carbon fibres is small the pressure vessels are unsatisfactory in impact resistance.

The object of this invention is to provide a pressure vessel made of fibre-reinforced plastics material which vessel has good lightness and impact resistance.

According to the invention there is provided a pressure vessel made of a fibre-reinforced plastics material formed from reinforcing fibres and a synthetic resin matrix characterised in that the reinforcing fibres are fibres formed of an aromatic polyester which exhibits anisotropy in its molten state.

By the term "pressure vessels" we mean vessels, generally of a cylindrical or spherical shape, which are capable of withstanding internal pressure. More particularly, they are used, beside as containers for general gases and liquids, as oxygen or air containers used in high mountains, medical treatment, first aid, welding, etc.; as cylinders for gases corrosive to metals; as containers for fuels used in aerospace; as containers for high purity chemical.

The aromatic polyester which exhibits anisotropy in its molten state is one which has the property of allowing the transmission of light at a temperature regin in which it is flowable when a powder sample of the polyester is placed on a heating sample stage positioned between two polarizing plates crossed at an angle of 90° and the temperature of the sample is increased. Such aromatic polyesters are those formed from aromatic dicarboxylic acids, aromatic diols and/or aromatic hydroxycarboxylic acid, and the derivatives thereof, e.g. as disclosed in Japanese Patent Application Kokoku (Post-Exam. Publn.) Nos. 18016/81 and 20008/80, and optionally derived for comonomers such as alicyclic dicarboxylic acids, alicyclic diols, aliphatic diols, and the derivatives thereof.

Examples of suitable aromatic dicarboxylic acids include terephthalic acid, isophthalic acid, 4,4'-dicarboxydiphenyl, 2,6-dicarboxynaphthalene, 1,2-bis(4-carboxyphenoxy)ethane, and the nuclear-substituted derivatives thereof, e.g. substituted with halogen or alkyl, aryl, alkoxy substituents.

Examples of suitable aromatic diols include hydroquinone, resorcinol, 4,4'-dihydroxydiphenyl, 4,4'-dihydroxybenzophenone, 4,4'-dihydroxydiphenylmethane, 4,4'-dihydroxydiphenylethane, 2,2-bis(4-hydroxyphenyl)-propane, 4,4'-dihydroxydiphenyl ether, 4,4'-dihydroxydiphenyl sulphone, 4,4'-dihydroxydiphenyl sulphide, 2,6-dihydroxynaphthalene, 1,5-dihydroxynaphthalene, and the nuclear-substituted derivatives thereof, e.g. substituted with halogen or alkyl, aryl or alkoxy substituents.

Examples of suitable aromatic hydroxycarboxylic acids include p-hydroxybenzoic acid, m-hydroxybenzoic acid, 2-hydroxynaphthalene-6-carboxylic acid, 1-hydroxynaphthalene-5-carboxylic acid, and the nuclear-substituted derivatives theroef, e.g. substituted with halogen or alkyl, aryl or alkoxy substituents.

Examples of alicyclic dicarboxylic acids include trans-1,4-dicarboxycyclohexane, cis-1,4-dicarboxycyclohexane and the substituted derivatives thereof, e.g. substituted with halogen or alkyl or aryl substituents.

Examples of alicyclic and aliphatic diols include trans-1,4-dihydroxycyclohexane, cis-1,4-dihydroxycyclohexane, ethylene glycol, 1,4-butanediol, and xylylene diol.

Among the combinations of the above materials, there may be mentioned as example of preferred aromatic polyesters to be used in this invention:

(1) a copolyester comprising from 40 to 70 mole % of p-hydroxybenzoic acid residue, from 15 to 30 mole % of an above-mentioned aromatic dicarboxylic acid residue, and from 15 to 30 mole % of an aromatic diol residue;

(2) a copolyester of terephthalic acid and/or isophthalic acid and chlorohydroquinone, phenylhydroquinone and/or hydroquinone; and

(3) a copolyester comprising from 20 to 80 mole % of p-hydroxybenzoic acid residue and 20 and 80% of 2-hydroxynaphthalene-6-carboxylic acid residue.

The polyesters may be obtained from the appropriate starting materials by polycondensation as they are or after esterification with by an aliphatic or aromatic monocarboxylic acid or a derivative thereof, or an aliphatic alcohol or a phenol, or a derivative thereof.

The polycondensation can be carried out in known manner including mass polymerization, solution polymerization and suspension polymerization. It may be conducted at 150 to 360°C under normal pressure or a reduced pressure of 10 to 0.1 Torr (1333—13,33 Pa) optionally in the presence of a polymerization catalyst such as Sb, Ti and Ge compound, a stabilizer such as a phosphorus compound, and fillers such as TiO$_2$, CaCO$_3$, and talc, added thereto. The polymer thus obtained is heat-treated, as it is in pulverized form, in an inert gas or under reduced pressure to give a sample material for spinning. It can also be used after having been once granulated through an extruder.

The aromatic polyester which exhibits anisotropy in its molten state thus obtained is formed into fibres, preferably by means of melt spinning. The melt spinning apparatus may be of any

2

desired type so long as it is provided with a melting section such as a screw or a plunger equipped with a heat control device, a metering section such as a gear pump, and a spinning head including a spinneret.

Suitable spinning temperatures are from 280 to 420°C, more preferably from 300 to 400°C.

The fibres obtained by melt spinning as mentioned above are then taken up or drawn down as they are or after adhering a textile oil thereto.

The fibre thus obtained may be used as it is, but it may be further subjected, as desired, to heat treatment, drawing, or to a combination of such treatments.

The thickness and the sectional shape of the aromatic polyester fibre may be suitably selected as desired. Preferred are fibres of from 0.5 to 10 deniers, having a strength of 15 g/d or more, and a modulus of elasticity of 500 g/d or more. More preferably, the fibres have a strength of 20 g/d or more and a modulus of elasticity of 500 g/d or more. Most preferably, they have strength of 25 g/d or more and a modulus of elasticity of 800 g/d or more.

Examples of synthetic resins which may be used as the matrix include epoxy resins, unsaturated polyester resins, phenol resins, diallyl phthalate resins, polyimide resins, polyolefin resins, polyamide resins, linear polyester resins, polycarbonate resins, polyamideimide resins, polyether resins, polysulphone resins, polyetherimide resins and polyetherketone resins.

As to the process for producing the pressure vessel of the invention from the fibres and the synthetic matrix resin, there may be used the filament winding method. The use of this method makes it possible to form pressure vessels even of a complicated convex shape.

Basically the filament winding method comprises winding around a base material (mandrel), a continuous fibre impregnated with a synthetic resin, or the raw materials thereof, or winding around a synthetic resin film or coating a continuous fibre, and then heating or further cooling the resulting system to effect curing.

Although the base material may be retained as such in a resulting vessel, it can also be removed, if desired, by dissolving it with a solvent. The removal of the base material may also be conducted by cutting, the formed pressure vessel in two across the barrel, removing the base material therefrom, and then reuniting the cut portions obtained above, to give a vessel freed from the base material.

The fibre winding may be conducted by such methods as helical winding, hoop winding, in-plane winding, and a combination of these methods.

In addition to the fibre formed of the aromatic polyester which exhibits anisotropy when melted, used as the reinforcing fibre, there may be used, as desired and in combination therewith, other fibres such as glass, carbon, alumina, silicon carbide, boron, amorphous metal, aramid, polyolefin fibres.

Although methods other than the filament winding method, for example a method which involves winding a textile fabric impregnated with a synthetic resin around a base material to form the barrel portion of a pressure vessel, may also be used, the filament winding method using a continuous fibre is preferably because it can make the most of the strength of the fibre formed of an aromatic polyester which exhibits anisotropy in its molten state.

The pressure vessel may also be coated on the outside with elastomers or synthetic resins to improve its impact resistance or to adjust its colour, or it may be coated on the inside to improve its airtightness or corrosion resistance.

The pressure vessel according to the invention is light in weight and has good impact resistance, pressure-withstanding characteristics and corrosion resistance. The pressure vessel of the invention is suitable for use as a container of various gases and liquids and can be used not only under ordinary conditions or environments but also in such special fields as the aerospace field and operations on high ground or in the depths of the sea.

The following Examples are given by way of illustration only. In the Examples, the measurement of the anisotropy of the aromatic polyester in its molten state was made by optical observation under polarized light with a sample placed on a heating stage and heated at a rate of 25°C/min.

## Referential Example

Into a polymerization vessel having a comb-type stirrer, were placed 7.20 kg (40 moles) of p-acetoxybenzoic acid, 4.32 kg (20 moles) of 2,6-dicarboxynaphthalene, and 5.45 kg (20.2 moles) of 4,4'-diacetoxydiphenyl, and the resulting mixture was brought to elevated temperature with stirring under a nitrogen gas atmosphere and polymerized at 330°C for 3 hours. During the period, the acetic acid formed was removed and the polymerization was carried out with powerful stirring. Thereafter, the system was gradually cooled and the polymer formed was taken out at 200°C from the system. The yield of polymer was 11.90 kg, 98.2% of theoretical yield. The polymer was pulverized in a hammer mill to give particles of 2.5 mm or less. The polymer powder was then treated in a rotary kiln in nitrogen atmosphere at 280°C for 5 hours. The resulting product showed optical anisotropy at a temperature of 350°C or higher.

The polymer obtained above was melt-spun by using a 30 mm screw type extruder. The spinneret used had a hole diameter of 0.07 mm, a hole length of 0.14 mm and a number of holes of 308.

When spinning was carried out at a cylinder tip temperature of 380°C and a spinneret temperature of 360°C, spinning could be conducted in a very stable way to give light-yellow transparent fiber.

When the fiber was treated in nitrogen at 320°C for 3 hours, it showed a density of 1.40 g/cm$^3$, a

size of 3.21 deniers, a strength of 29.1 g/d (366 kg/mm²), an elongation of 2.9%, and a modulus of elasticity of 1,010 g/d (12.7 t/mm²).

Example 1
A pressure vessel comprising the fiber obtained in Referential Example and epoxy resin was prepared by the filament winding method.

Sumiepoxy ELM-128 (a trade name, mfd. by Sumitomo Chemical Co., Ltd.), an epoxy resin, HN-5500 (a trade name of an acid anhydride, mfd. by Hitachi Chemical Co., Ltd.), a curing agent, and a tertiary amine were mixed together in a proportion of 100 : 85 : 1 (by weight) to obtain a liquid product.

The fiber obtained in Referential Example was passed through the liquid product, thereby to be impregnated with the resin liquid. The resin-impregnated fiber thus obtained was wound around a liner (base material) for a pressure vessel by means of a combination of helical winding and hoop winding.

The liner for a pressure vessel used was a hollow vessel made of aluminium having a volume of 1.2 l, total length of 200 mm, cylinder diameter of 100 mm, port diameter of 26 mm, liner thickness of 0.5 mm, and weight of 100 g. The vessel was designed so as to give a bursting pressure of 300 kg/cm². Helical winding was carried out at an angle of 13.6° to the central axis direction and in a thickness of 0.5 mm. Hoop winding was conducted in a thickness of 0.7 mm.

The resin-impregnated fiber wound around the liner was heat-treated at 120°C for 2 hours while being rotated around the central axis, to effect curing of the epoxy resin. The volume fraction of the fiber in the fiber-reinforced composite material thus obtained was 57%.

The pressure vessel thus prepared had a total weight of 170 g and gave a value of P (bursting pressure) × V (volume of the pressure vessel)/W (weight of the pressure vessel) of 2.12 × 10⁶ cm.

Comparative Example
A pressure vessel was prepared in the same manner as in Example 1 except that glass fiber was used as the reinforcing fiber. The glass fiber used had a density of 2.52 g/cm³ and a strength of 208 kg/mm².

The pressure vessel had a total weight of 370 g and gave a value of P × V/W of 1.06 × 10⁶ cm.

Test Example
The pressure vessel according to this invention prepared in Example 1, the pressure vessel prepared in Comparative Example by use of glass fiber, and a pressure vessel prepared in a similar manner but by use of carbon fiber were dropped from a height of 5 m onto a steel plate of 3 mm thickness.

The vessel prepared by use of carbon fiber cracked or broke at the first dropping and the one prepared by use of glass fiber at the second dropping, whereas the pressure vessel according to this invention showed no charge even after 5 times of dropping, revealing its excellent impact resistance.

Claims

1. A pressure vessel made of a fibre-reinforced plastics material formed from reinforcing fibres and a synthetic resin matrix characterized in that the reinforcing fibres are fibres formed of an aromatic polyester which exhibits anisotropy in its molten state.

2. A pressure vessel according to claim 1 characterized in that the aromatic polyesters is derived from an aromatic diol and/or aromatic hydrocarboxylic acid or derivative thereof.

3. A pressure vessel according to claim 2 characterized in that the aromatic dicarboxylic acid is terephthalic acid, isophthalic acid, 4,4'-dicarboxyldiphenyl, 2,6-dicarboxynaphthalene or 1,2-bis(4-carboxyphenoxy)ethane, or a nuclear-substituted derivative thereof having halogen, alkyl, aryl, or alkoxy substituents.

4. A pressure vessel according to claim 2, characterized in that the aromatic diol is hydroquinone, resorcinol, 4,4'-di-hydroxydiphenyl, 4,4'-dihydroxybenzophenone, 4,4'-di-hydroxydiphenylmethane, 4,4'-dihydroxydiphenylethane, 2,2-bis(4-hydroxyphenyl)propane, 4,4'-dihydroxydiphenyl ether, 4,4'-dihydroxydiphenyl sulphone, 4,4'-dihydroxydiphenyl sulphide, 2,6-dihydroxynaphthalene or 1,5-dihydroxynaphthalene, or a nuclear-substituted product thereof having halogen or alkyl, aryl or alkoxy substituents.

5. A pressure vessel according to claim 2, wherein the aromatic hydrocarboxylic acid is p-hydroxybenzoic acid, m-hydroxybenzoic acid, 2-hydroxynaphthalene-6-carboxylic acid or 1-hydroxynaphthalene-5-carboxylic acid, or a nuclear-substituted product thereof having halogen or alkyl, aryl or alkoxy substituents.

6. A pressure vessel according to any one of the preceding claims wherein the aromatic polymer is
(i) a copolyester comprising 40 to 70 mole % of p-hyroxybenzoic acid residues, 15 to 30 mole % of an aromatic dicarboxylic acid residues, and 15 to 30 mole % of aromatic diol residues;
(ii) a copolyester of terephthalic acid and/or isophthalic acid together with chlorohydroquinone, phenylhydroquinone and/or hydroquinone; or
(iii) a copolyester comprising 20 to 80 mole % of p-hydroxybenzoic acid residues and 20 to 80 mole % of 2-hydroxynaphthalene-6-carboxylic acid residues.

7. A pressure vessel as claimed in any one of the preceding claims characterized in that the fibres of aromatic polyesters have thickness of 0.5 to 10 deniers, a strength of 15 g/d or more, and a modulus of elasticity of 500 g/d or more.

8. A pressure vessel as claimed in any one of the preceding claims characterized in that the synthetic resin used as matrix is an epoxy, unsaturated polyester, phenol, diallyl phthalate, polyimide, polyolefin, polyamide, linear polyester, polycarbonate, polyamideimide, polyether, polysulphone, polyetherimide or polyetherketone resin.

9. A pressure vessel as claimed in any one of the preceding claims also containing further reinforcing fibres which are glass, carbon, alumina, silicon carbide, boron, amorphous metal fibre, aramid, or polyolefin fibres.

10. A process for producing a pressure vessel by forming the vessel from a reinforcing fibre and a synthetic resin matrix by a filament winding method characterized in that the reinforcing fibre is an aromatic polyester which exhibits anisotropy in its molten state.

## Patentansprüche

1. Druckgefäß aus einem faserverstärkten Kunststoff, hergestellt aus Verstärkungsfasern und einer Kunstharzmatrix, dadurch gekennzeichnet, daß es sich bei den Verstärkungsfasern um aus einem in seinem Schmelzezustand Anisotropie aufweisenden aromatischen Polyester hergestellte Fasern handelt.

2. Druckgefäß nach Anspruch 1, dadurch gekennzeichnet, daß der aromatische Polyester von einem aromatischen Diol und/oder einer aromatischen Hydroxycarbonsäure oder einem Derivat derselben herrührt.

3. Druckgefäß nach Anspruch 2, dadurch gekennzeichnet, daß die aromatische Dicarbonsäure aus Terephthalsäure, Isophthalsäure, 4,4'-Dicarboxyldiphenyl, 2,6-Dicarboxynaphthalin oder 1,2-Bis-(4-carboxyphenoxy)-ethan oder einem im Kern substituierten Derivat derselben mit Halogen-, Alkyl-, Aryl- oder Alkoxysubstituenten besteht.

4. Druckgefäß nach Anspruch 2, dadurch gekennzeichnet, daß das aromatische Diol aus Hydrochinon, Resorcin, 4,4'-Dihydroxydiphenyl, 4,4'-Dihydroxybenzophenon, 4,4'-Dihydroxydiphenylmethan, 4,4'-Dihydroxydiphenylethan, 2,2-Bis-(4-hydroxyphenyl)-propan, 4,4'-Dihydroxydiphenylether, 4,4'-Dihydroxydiphenylsulfon, 4,4'-Dihydroxydiphenylsulfid, 2,6-Dihydroxynaphthalin oder 1,5-Dihydroxynaphthalin oder einem im Kern substituierten Produkt derselben mit Halogen- oder Alkyl-, Aryl- oder Alkoxysubstituenten besteht.

5. Druckgefäß nach Anspruch 2, dadurch gekennzeichnet, daß die aromatische Hydroxycarbonsäure aus p-Hydroxybenzoesäure, m-Hydroxybenzoesäure, 2-Hydroxynaphthalin-6-carbonsäure oder 1-Hydroxynaphthalin-5-carbonsäure oder einem im Kern substituierten Produkt derselben mit Halogen- oder Alkyl-, Aryl- oder Alkoxysubstituenten besteht.

6. Druckgefäß nach einem der vorhergehenden Ansprüche, dadurch gekennzeichnet, daß der aromatische Polyester aus

1. einem Copolyester mit 40—70 Mol-% p-Hydroxybenzoesäureeinheiten, 15—30 Mol-% an Einheiten einer aromatischen Dicarbonsäure und 15—30 Mol-% aromatischen Dioleinheiten,

2. einem Copolyester aus Terephthalsäure und/ oder Isophthalsäure und Chlorhydrochinon, Phenylhydrochinon und/oder Hydrochinon oder

3. einem Copolyester mit 20—80 Mol-% p-Hydroxybenzoesäureeinheiten und 20—80 Mol-% 2-Hydroxynaphthalin-6-carbonsäureeinheiten besteht.

7. Druckgefäß nach einem der vorhergehenden Ansprüche, dadurch gekennzeichnet, daß die Fasern aus dem aromatischen Polyester eine Dicke von 0,5—10 denier, eine Festigkeit von 15 g/d oder mehr und einen Elastizitätsmodul von 500 g/d oder mehr aufweisen.

8. Druckgefäß nach einem der vorhergehenden Ansprüche, dadurch gekennzeichnet, daß es sich bei dem als Matrix verwendeten Kunstharz um ein Epoxy-, ungesättigtes Polyester-, Phenol-, Diallylnaphthalat-, Polyimid-, Polyolefin-, Polyamid-, lineares Polyester-, Polycarbonat-, Polyamidimid-, Polyether-, Polysulfon-, Polyetherimid- oder Polyetherketonharz handelt.

9. Druckgefäß nach einem der vorhergehenden Ansprüche, ferner enthaltend weitere Verstärkungsfasern in Form von Glas-, Kohlenstoff-, Aluminiumoxid-, Siliziumcarbid-, Bor-, amorphen Metall-, Aramid- oder Polyolefinfasern.

10. Verfahren zur Herstellung eines Druckgefäßes durch Ausbilden desselben aus einer Verstärkungsfaser und einer Kunstharzmatrix nach einer Fadenwickelmethode, dadurch gekennzeichnet, daß die Verstärkungsfaser aus einem in seinem Schmelzzustand Anisotropie aufweisenden aromatischen Polyester besteht.

## Revendications

1. Récipient sous pression fait d'une matière plastique renforcée par des fibres constituée de fibres de renfort et d'une matrice de résine synthétique, caractérisé en ce que les fibres de renfort sont des fibres formées d'un polyester aromatique qui présente une anisotropie à l'état fondu.

2. Récipient sous pression selon la revendication 1, caractérisé en ce que le polyester aromatique provient d'un acide dicarboxylique aromatique, d'un diol aromatique et/ou d'un acide hydroxycarboxylique ou d'un de leurs dérivés.

3. Récipient sous pression selon la revendication 2, caractérisé en ce que l'acide dicarboxylique aromatique est l'acide téréphtalique, l'acide isophtalique, le 4,4'-dicarboxydiphényle, le 2,6-dicarboxynaphtalène ou le 1,2-bis(4-carboxyphénoxy)éthane ou un de leurs dérivés à substitution nucléaire ayant des substituants halogène, alkyle, aryle ou alcoxy.

4. Récipient sous pression selon la revendication 2, caractérisé en ce que le diol aromatique est l'hydroquinone, le résorcinol, le 4,4'-dihydroxydiphényle, la 4,4'-dihydroxybenzophénone, le 4,4'-dihydroxydiphénylméthane, le 4,4'-dihydroxydiphényléthane, le 2,2-bis(4-hydroxyphényl)propane, l'oxyde de 4,4'-dihydroxydiphényle, la 4,4'-dihydroxydiphénylsulfone, le sulfure de 4,4'-dihydroxydiphényle, le 2,6-dihydroxynaphtalène ou le 1,5-dihydroxynaphtalène ou un de leurs dérivés à substitution nucléaire ayant des substituants halogène, alkyle, aryle ou alcoxy.

5. Récipient sous pression selon la revendication 2, dans lequel l'acide hydroxycarboxylique aromatique est l'acide p-hydroxybenzoïque, l'acide m-hydroxybenzoïque, l'acide 2-hydroxynaphtalène-6-carboxylique ou l'acide 1-hydroxynaphtalène-5-carboxylique ou un de leurs dérivés à substitution nucléaire ayant des substituants halogène, alkyle, aryle ou alcoxy.

6. Récipient sous pression selon l'une quelconque des revendications précédentes, dans lequel le polyester aromatique est

i) un copolyester comprenant 40 à 70% en moles de restes d'acide p-hydroxybenzoïque, 15 à 30% en moles de restes d'acide dicarboxylique aromatique et 15 à 30% en moles de restes de diol aromatique;

ii) un copolyester d'acide téréphtalique et/ou d'acide isophtalique avec de la chlorohydroquinone, de la phénylhydroquinone et/ou de l'hydroquinone; ou

iii) un copolyester comprenant 20 à 80% en moles de restes d'acide p-hydroxybenzoïque et 20 à 80% en moles de restes d'acide 2-hydroxynaphtalène-6-carboxylique.

7. Récipient sous pression selon l'une quelconque des revendications précédentes, caractérisé en ce que les fibres de polyester aromatique ont une épaisseur de 0,5 à 10 deniers, une résistance de 15 g/d ou plus et un module d'élasticité de 500 g/d ou plus.

8. Récipient sous pression selon l'une quelconque des revendications précédentes, caractérisé en ce que la résine synthétique utilisée comme matrice est une résine époxy, de polyester insaturé, phénolique, de phtalate de diallyle, de polyimide, polyoléfinique, de polyamide, de polyester linéaire, de polycarbonate, de polyamideimide, de polyéther, de polysulfone, de polyétherimide ou de polyéthercétone.

9. Récipient sous pression selon l'une quelconque des revendications précédentes, contenant également d'autres fibres de renfort qui sont des fibres de verre, de carbone, d'alumine, de carbure de silicium, de bore, des fibres métalliques amorphes, des fibres d'aramide ou des fibres de polyoléfines.

10. Procédé de production d'un récipient sous pression par fabrication du récipient à partir de fibres de renfort et d'une matrice de résine synthétique par un procédé d'enroulement de filaments, caractérisé en ce que les fibres de renfort sont en polyester aromatique qui présente une anisotropie à l'état fondu.